# EUROPÄISCHE PATENTSCHRIFT

(11) **EP 1 810 297 B1**
(45) Veröffentlichungstag und Bekanntmachung des Hinweises auf die Patenterteilung: **14.05.2008**
(21) Anmeldenummer: 05802245.0
(22) Anmeldetag: 27.10.2005
(51) Int. Cl.: G21C 17/07

(54) **VERFAHREN ZUM PRÜFEN VON BRENNELEMENTEN EINES SIEDEWASSERREAKTORS AUF DICHTHEIT IHRER BRENNSTÄBE**
METHOD FOR TESTING THE IMPERMIABILITY OF FUEL ELEMENTS OF A WATER BOILING REACTOR FUEL RODS
PROCEDE POUR CONTROLER L'ETANCHEITE DE CRAYONS COMBUSTIBLES D'ELEMENTS COMBUSTIBLES D'UN REACTEUR A EAU BOUILLANTE

(30) Priorität: 11.11.2004 DE 102004054461
(43) Veröffentlichungstag der Anmeldung: 25.07.2007
(73) Patentinhaber: AREVA NP GmbH, 91052 Erlangen (DE)
(72) Erfinder: PÜLMANNS, Markus, 91052 Erlangen (DE); STARK, Richard, 91090 Effeltrich (DE)
(74) Vertreter: Mörtel & Höfner
(86) Internationale Anmeldenummer: PCT/EP2005/011499
(87) Internationale Veröffentlichungsnummer: WO 2006/050817

(56) Entgegenhaltungen:
- WO-A-00/74071
- US-A- 4 248 666
- US-A- 4 416 847

## Beschreibung

Die Erfindung bezieht sich auf ein Verfahren zum Prüfen von Brennelementen eines Siedewasserreaktors auf Dichtheit ihrer Brennstäbe.

In einem Siedewasserreaktor müssen die Brennstäbe der Brenn-elemente regelmäßig auf Dichtheit überprüft werden, um defekte Brennstäbe rechtzeitig austauschen zu können und eine radioaktive Kontamination des Kühlwassers zu vermeiden. Dabei wird angestrebt, alle Brennelemente des Kerns in möglichst kurzer Zeit während routinemäßiger Revisionsarbeiten zu überprüfen, um unnötige Stillstandszeiten zu vermeiden. Eine verbreitet angewandte Technik zum Auffinden undichter Brennelemente ist die sogenannte Sipping-Methode. Diese basiert auf der Idee, eine eventuell vorhandene Leckage nachzuweisen, indem aus der Umgebung des Brennstabs eine flüssige (wet sipping) oder eine gasförmige Probe (dry sipping) entnommen wird und auf das Vorhandensein radioaktiver Spaltprodukte untersucht wird. Um die Nachweisempfindlichkeit zu erhöhen, werden durch geeignete Maßnahmen die innerhalb der bestrahlten Brennstäbe befindlichen radioaktiven Spaltprodukte durch eventuell vorhandene Leckagen in den Brennstabhüllrohren vermehrt ausgetrieben, so dass diese im Falle einer Leckage außerhalb des Brennstabs angereichert und in der entnommenen Probe leichter nachgewiesen werden können.

Eine besonders geeignete Technik ist das sogenannte Haubensipping, wie es beispielsweise aus der WO 00/74071 bekannt ist.

Bei diesem bekannten Verfahren wird eine Mehrzahl von Brennelementen, beispielsweise 16 Brennelemente, durch eine Haube abgedeckt und über diesen Brennelementen wird ein Gaspolster erzeugt. Aufgrund dieses unter der Haube befindlichen Gaspolsters wird der Austausch von Kühlwasser gestoppt. Die Brennelemente heizen sich durch deren Nachzerfallsleistung auf, und es werden vermehrt radioaktive Spaltprodukte aus gegebenenfalls vorhandenen defekten Brennstäben ausgetrieben. Bei einem Teil dieser Spaltprodukte handelt es sich um in Wasser gelöste und unter Normalbedingungen gasförmige Stoffe, insbesondere Kr-85 und Xe-133. Zum Nachweis dieser Spaltprodukte werden kontinuierlich Wasserproben entnommen (wet sipping) und die entnommenen Wasserproben kontinuierlich entgast. Das beim Entgasen entstehende Gas wird mit einem Strahlungsdetektor während der Probenentnahme fortlaufend analysiert.

Bei dem bekannten Verfahren wird nun eine Verkürzung der zum Untersuchen des gesamten Kerns erforderlichen Zeit dadurch erzielt, dass in einem ersten Schritt die Wasserproben der vier in einer Zelle des Kerngitters befindlichen Brennelementen zusammengefasst und jeweils einer eine Entgasungsvorrichtung und eine Detektoranordnung enthaltende Analyseeinrichtung zugeführt, werden. Mit anderen Worten: Mit vier Analyseeinrichtungen können simultan 4x4 Brennelemente überprüft werden. Im Falle eines positiven Befundes bei einer dieser Zellen werden nun die Analyseeinrichtungen umgeschaltet, und die vier Wasserproben der vier Brennelemente dieser Zelle werden getrennt voneinander den Analyseeinrichtungen zugeführt, um auf diese Weise eines oder mehrere defekte Brennelemente dieser Zelle eindeutig zu identifizieren. Da in der Regel nur wenige Brennelemente tatsächlich einen Defekt aufweisen, ist durch diese bekannte Sippingstrategie eine gegenüber anderen herkömmlichen Sippingtechniken deutlich reduzierte Prüfzeit gegeben.

Bei dem bekannten Verfahren ist jedoch wesentliche Voraussetzung für das eindeutige Identifizieren eines defekten Brennelementes, dass durch das in der Sippinghaube erzeugte Gaspolster der Wasserspiegel so weit abgesenkt wird, dass zwischen den Brennelementen einer solchen Zelle im Ansaugbereich ein Austausch von Kühlwasser nahezu ausgeschlossen ist, da in diesem Falle auch intakte, in derselben Zelle neben einem defekten Brennelement angeordnete Brennelemente als positiv befundet werden könnten. Mit anderen Worten: Innerhalb einer solchen Zelle muss der Wasserspiegel so tief abgesenkt werden, dass die Oberkanten der die Brennstäbe jeweils umschließenden Brennelementkästen oberhalb des Wasserspiegels liegen.

Aufgrund konstruktiver Unterschiede zwischen den Brennelementen verschiedener Hersteller einerseits als auch anlagenspezifisch verschiedener Einbausituationen andererseits können jedoch die Oberkanten der Brennelementkästen unterschiedlich weit über die Oberkante des oberen Kerngitters vorstehen oder sogar unterhalb dieser Oberkante liegen. Bei dem bekannten Verfahren muss deshalb der Wasserspiegel in jeder Zelle auf die jeweils vorliegenden Einbauverhältnisse eingestellt werden, um einen Queraustausch von Kühlwasser zwischen benachbarten Brennelementen zu vermeiden. Dies erfordert einen zusätzlichen Kontrollaufwand vor der Probenentnahme, der mit einem erhöhten Zeitbedarf verbunden ist. Darüber hinaus können auch Einbauverhältnisse vorliegen, die eine simultane und isolierte Probenentnahme aus allen Brennelementen einer Kernzelle grundsätzlich vereiteln.

Der Erfindung liegt nun die Aufgabe zu Grunde, ein Verfahren zum Prüfen von Brennelementen eines Siedewasserreaktors auf Dichtheit ihre Brennstäbe anzugeben, bei dem bei nach wie vor kurzer Prüfzeit die vorstehend genannten Probleme vermieden sind.

Die genannte Aufgabe wird gemäß der Erfindung gelöst mit einem Verfahren mit den Merkmalen des Patentanspruches 1. Bei dem Verfahren zum Prüfen von Brennelementen eines Siedewasserkernreaktors auf Dichtheit ihrer Brennstäbe, wobei jeweils eine Mehrzahl von Brennelementen zueinander benachbart in einer Zelle des oberen Kerngitters des Siedewasserreaktors angeordnet sind, werden die Brennelemente einer eine Abteilung bildenden Mehrzahl von Zellen gleichzeitig dadurch aufgeheizt, dass über diese Abteilung eine Haube gesetzt wird. Aus jeder Zelle dieser Abteilung wird zumindest eine Wasserprobe entnommen und die Wasserproben einer Mehrzahl von eine Gruppe bildenden Zellen werden zusammengeführt und auf das Vorhandensein von in der Wasserprobe enthaltenen radioaktiven Spaltprodukten untersucht, wobei eine Mehrzahl von Gruppen in einer dieser Mehrzahl der Gruppen entsprechenden Anzahl von Messkanälen einer Analyseeinrichtung gleichzeitig und unabhängig voneinander analysiert werden. Im Falle eines positiven Befundes in einer Gruppe werden die Wasserproben aus den in dieser Gruppe befindlichen Zellen getrennt voneinander der Analyseeinrichtung zugeführt und in einer entsprechenden Anzahl von Messkanälen getrennt voneinander analysiert, und die Brennelemente einer positiv analysierten Zelle werden jeweils für sich genommen außerhalb der Haube geprüft.

Die Erfindung geht dabei von der Überlegung aus, dass die in einer Zelle befindlichen Brennelemente durch das Erzeugen eines Gaspolsters unterhalb einer Haube bedingt durch unterschiedliche Einbausituationen nicht sicher voneinander separiert werden können, so dass bei einer Einzelanalyse der unter der Haube befindlichen Brennelemente eine Interpretation der Analyseergebnisse und eine sichere Identifikation eines defekten Brennelementes erschwert ist.

Durch die erfindungsgemäße Vorgehensweise, nämlich das Haubensipping lediglich zur Identifikation einer mit einem defekten Brennelement besetzten Zelle zu benutzen, können mit einer geringen Anzahl n von Messkanälen nxn Zellen in nur zwei Schritten überprüft werden. Da in der Regel nur eine geringe Anzahl von Brennelementen tatsächlich defekt sind, müssen nur die Brennelemente einer geringen Anzahl von Zellen einer Einzelanalyse unterzogen werden, die stattfindet, wenn sich das Brennelement nicht mehr unter der Haube befindet, so dass bei nach wie vor geringer Gesamtprüfzeit eine hohe Sicherheit bei der Identifikation defekter Brennelemente auch bei komplizierten anlagenspezifischen Einbauverhältnissen erzielt wird.

Vorzugsweise sind die unterhalb der Haube befindlichen Zellen im Bereich der Haube fluidtechnisch voneinander und von den außerhalb der Haube befindlichen Zellen getrennt. Durch diese Trennung wird einerseits die konvektive Kühlung der unter der Haube befindlichen Brennelemente und andererseits der Austausch von Wasser zwischen den unter der Haube befindlichen Zellen unterbunden.

Eine besonders effiziente Verkürzung der Gesamtprüfzeit wird erzielt, wenn die Haube nach erfolgter Analyse einer Abteilung auf eine andere Abteilung umgesetzt wird und die im Falle eines positiven Befundes stattfindende Prüfung der einzelnen Brennelemente einer positiv befundeten Zelle simultan mit der Prüfung der anderen Abteilung durchgeführt wird.

Insbesondere erfolgt die Probenentnahme aus einer Zelle mit einer der Anzahl der in dieser Zelle befindlichen Brennelemente entsprechenden Anzahl von Ansaugleitungen, deren Entnahmestellen jeweils einem Brennelement zugeordnet sind. Dadurch wird die Messempfindlichkeit erhöht.

Vorzugsweise werden die Brennelemente einer positiv analysierten Zelle nacheinander mit einem Teleskopmast einer Brennelement-Lademaschine aus dem Kern angehoben und in dieser angehobenen Position Wasserproben entnommen und analysiert. Ein solches Mastsipping-Verfahren führt zu einer weiteren Verringerung der Gesamtprüfzeit.

Zur näheren Erläuterung der Erfindung wird auf das Ausführungsbeispiel der Zeichnung verwiesen. Es zeigen:
Fig. 1 eine Einrichtung bei der Durchführung des Verfahrens gemäß der Erfindung in einer schematischen Prinzipdarstellung,
Fig. 2 eine auf die Brennelemente abgesetzte Haube in Arbeitsposition während einer Probenentnahme in einer vereinfachten schematischen Darstellung,
Fig. 3 und 4 den Prüfablauf gemäß der Erfindung ebenfalls jeweils in einer schematischen Darstellung.

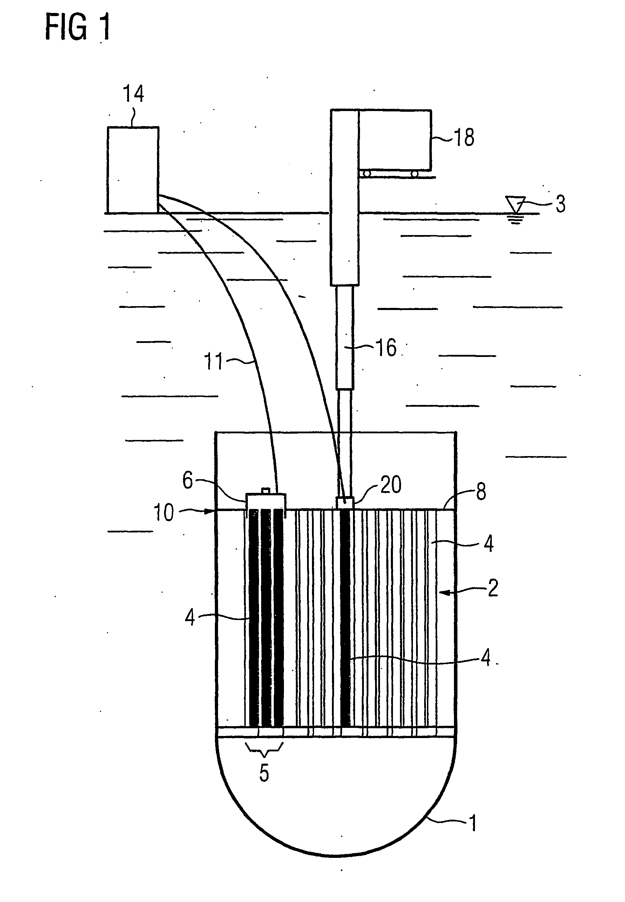

Gemäß Fig. 1. ist der Reaktordruckbehälter 1 eines Siedewasserreaktors zur Überprüfung der in seinem Kern 2 angeordneten Brennelemente geöffnet und das Reaktorbecken, in dem sich der Reaktordruckbehälter 1 befindet, bis zu einem Niveau 3 geflutet. Eine aus einer Mehrzahl benachbart angeordneter, jeweils vier Brennelemente enthaltender Zellen 4 des Kerns 2 bestehende Abteilung 5 ist von einer Haube 6 überdeckt, die am oberen Rand 8 eines oberen Kerngitters 10 aufsitzt. Mit Hilfe eines mehrkanaligen Probenentnahmesystems 11, in der Figur lediglich schematisch angedeutet durch eine Entnahmeleitung, werden Wasserproben entnommen und einer, mehrkanaligen Analyseeinrichtung 14 zugeführt, in der die Wasserproben entweder direkt oder nach deren Entgasen auf das Vorhandensein radioaktiver Spaltprodukte untersucht werden (sogenanntes Haubensipping).

Die Haube 6 ist in einem vorhergehenden Arbeitsschritt mit Hilfe des Teleskopmastes 16 einer Brennelement-Lademaschine 18 über den zu prüfenden Zellen 4 abgesetzt worden. Nach dem Absetzen der Haube 6 wird diese vom Teleskopmast 16 abgekoppelt, so dass dieser in eine andere Position über dem Kern 2 verfahren werden kann. In der Fig. ist eine Situation dargestellt, in der sich der Teleskopmast 16 mit einer an seinem freien Ende installierten Probenentnahmeeinrichtung 20 über einer Zelle 4 befindet, die in einer vorangegangenen Untersuchung mit der Haube 6 positiv befundet worden war. Die in dieser Zelle 4 befindlichen Brennelemente werden mit dem Teleskopmast 16 nacheinander aus dem Kern 2 ausgehoben und in der angehobenen Position durch Entnahme einer Wasserprobe in der Analyseeinrichtung 14 jeweils für sich genommen, d.h. einzeln nacheinander auf Undichtigkeit untersucht. Bei diesem als Mastsipping bezeichneten Verfahren wird ausgenutzt, dass durch eine beim Anheben erfolgende Druckentlastung vermehrt Spaltprodukte aus eventuell vorhandenen Leckagen ausgetrieben werden. Während dieser Einzelprüfung der Brennelemente wird die Untersuchung der unter der Haube 6 befindlichen Zellen 4 in der mehrkanaligen Analyseeinrichtung 14 durchgeführt. Alternativ hierzu ist es auch möglich, die Brennelemente der positiv analysierten Zelle 4 in das Brennelementlagerbecken umzusetzen und dort in einer separaten Messstation zu analysieren.

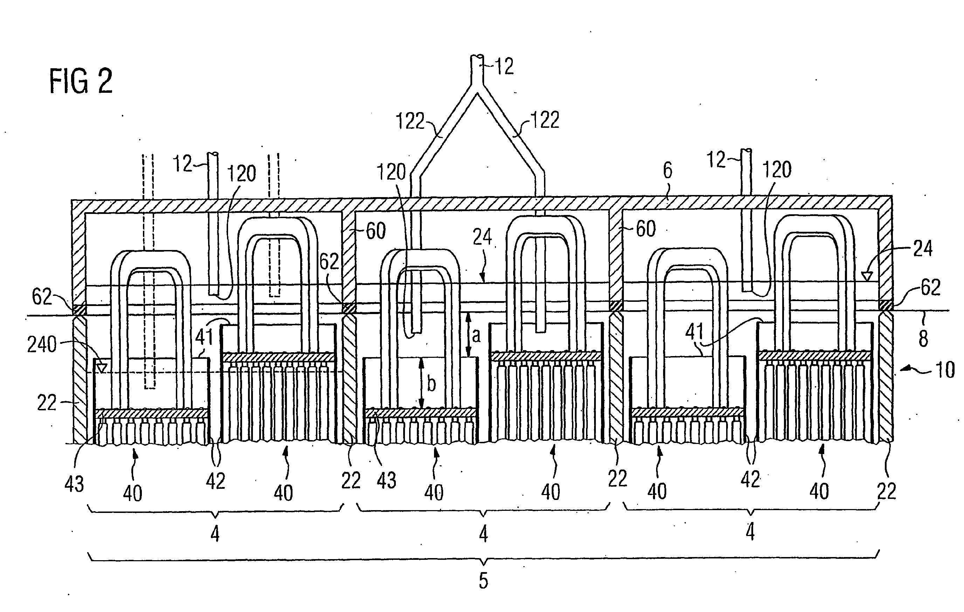

Gemäß Fig. 2 überdeckt die Haube 6 die Abteilung 5, die im Beispiel 3x3 Zellen 4 enthält, von denen in der schematischen Schnittdarstellung nur 3 zu erkennen sind. Innerhalb der Haube 6 angeordnete Trennwände 60 dienen zur Separation der einzelnen unter der Haube 6 befindlichen Zellen 4. Die Haube 6 und die Trennwände 60 liegen mit Dichtungen 62 auf den Stegen 22 des oberen Kerngitters 10 auf. In jeder Zelle 4 befinden sich 4 Brennelemente 40. Durch die Haube 6 sind die Brennelemente 40 einer unter ihr befindlichen Zelle 4 von den Brennelementen 40 der anderen unter ihr befindlichen Zellen 4 getrennt. Die unterhalb der Haube 6 befindlichen Brennelemente 40 werden dann nicht mehr von Wasser durchströmt, so dass sich das in den Brennelementen befindliche, nunmehr ruhende Wasser durch die Nachzerfallswärme auf eine um etwa 10°C bis 15°C höhere Temperatur als das außerhalb der Haube 6 strömende Wasser aufheizt. Durch das Einblasen von Druckgas wird der Wasserspiegel 24 unter der Haube 6 abgesenkt, so dass ein Gaspolster entsteht.

In der Fig. ist eine Einbausituation dargestellt, in der sich die Oberkanten 41 der Brennelementkästen 42 der Brennelemente 40 unterhalb des oberen Randes 8 des Kerngitters 10 befinden. Sowohl der Abstand a zwischen der Oberkante 41 eines Brennelementkastens und dem oberen Rand 8 des Kerngitters 10 als auch der Abstand b einer oberen Stabhalteplatte 43 zur Oberkante 41 in der Fig. nur für das linke Brennelement 40 eingezeichnet, können aufgrund unterschiedlichen strahlungsinduzierten Längenwachstums von Brennelement zu Brennelement variieren, so dass eine Einbausituation vorliegen kann, wie sie in der Figur dargestellt ist.

Jeder der Zellen 4 ist eine Ansaugleitung 12 des Probeentnahmesystems 11 zugeordnet, die zumindest eine Entnahmestelle 120 aufweist, mit der die Wasserproben knapp unterhalb des zumindest über dem höchsten Brennelementkasten 42 befindlichen Wasserspiegels 24 entnommen werden. In der linken und rechten Zelle 4 ist jeweils eine Ansaugleitung 12 mit nur einer einzigen Entnahmestelle 120 vorgesehen. Eine alternative Ausgestaltung der Probenentnahme ist in der mittleren Zelle 4 dargestellt, bei der von der Ansaugleitung 12 vier Teilzweige 122 abzweigen, deren Entnahmestellen 120 jeweils einem Brennelement 40 zugeordnet sind. In diesem Fall ist anzustreben, falls dies technisch aufgrund der jeweils anlagenspezifischen Einbausituation möglich ist, die Entnahmestellen 120 möglichst innerhalb des Brennelementkastens 42 anzuordnen.

Die in der Figur dargestellten Einbausituation, die in der vereinfachten Darstellung für alle Zellen 40 identisch, in der Praxis aber von Zelle 40 zu Zelle 40 verschieden ist, gibt nun eine Situation wieder, in der unter der Haube 6 eine simultane Einzelmessung der in einer Zelle 4 befindlichen Brennelemente 40 mit dem eingangs geschilderten und aus dem Stand der Technik bekannten Verfahren prinzipiell nicht möglich ist. Zur isolierten Probenentnahme von Wasser aus dem linken Brennelement 40 einer Zelle 4 müsste nämlich der Wasserspiegel auf ein Niveau 240 abgesenkt werden, das unterhalb der oberen Stabhalteplatte 43 des rechten Brennelementes liegt. Bei einem solchen Niveau 240 könnte jedoch aus dem rechten Brennelement 40 keine Wasserprobe entnommen werden, da die Entnahmestelle 120 nicht durch die Stabhalteplatte 43 hindurch geführt werden kann. Es müssten demnach zeitlich nacheinander Proben bei unterschiedlich eingestelltem Wasserspiegel entnommen werden. Darüber hinaus wäre es auch erforderlich, die Höhenlage der Entnahmestellen 120 bei aufgesetzter Haube ferngesteuert den jeweiligen von Zelle zu Zelle unterschiedlichen Einbauverhältnissen anzupassen, wie dies gestrichelt in der linken Zelle 4 eingezeichnet ist.. Diese Schwierigkeiten werden gemäß der Erfindung umgangen einerseits durch den Verzicht auf eine Einzelanalyse der Brennelemente 40, während sich dies unter der Haube 6 befinden und andererseits durch eine vereinfachte feste Anordnung der Entnahmestellen 120 derart, dass sichergestellt ist, dass die aus einem Brennstab gegebenenfalls austretenden Spaltprodukte eines jeden Brennelementes 40 erfasst werden, auch wenn deren Zuordnung zu einem bestimmten Brennelement 40 nicht möglich ist.

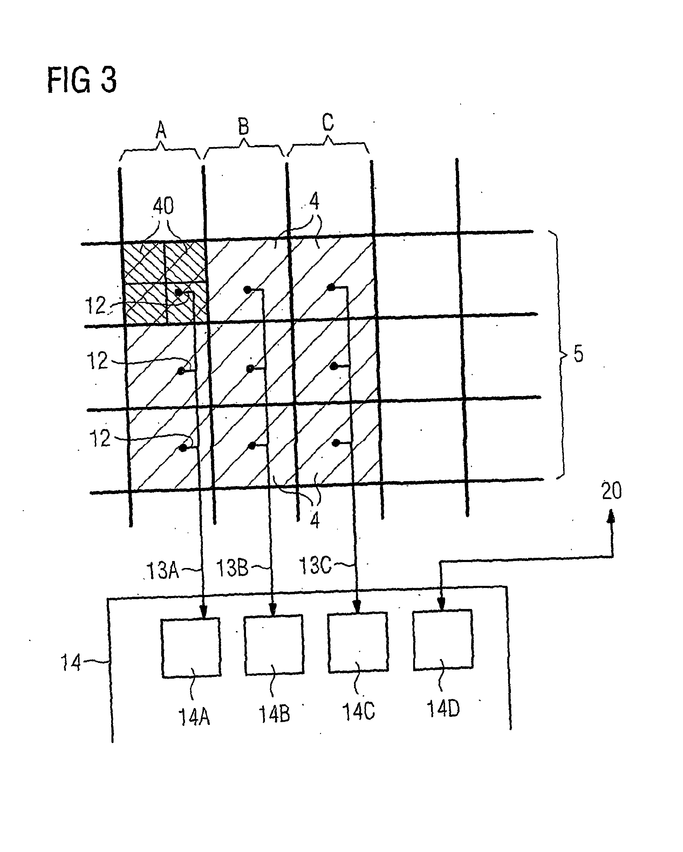

Gemäß Fig. 3 wird durch die Haube zunächst eine durch Schraffur hervorgehobene Abteilung 5 aus 3x3 Zellen 4 abgedeckt und aufgeheizt. Jeweils drei Zellen 4 dieser Abteilung 5 werden zu einer Gruppe A, B oder C zusammengefasst, indem die Ansaugleitungen 12 der zu diesen Gruppen A,B,C jeweils gehörenden Zellen 4 auf eine diesen Gruppen jeweils zugeordnete gemeinsame Sammelleitung 13A,B,C geschaltet. Über die Sammelleitungen 13A,B,C werden die entnommenen Wasserproben getrennt voneinander Messkanälen 14A, 14B und 14C der Analyseeinrichtung 14 zugeführt und dort unabhängig voneinander analysiert. Ein weiterer Messkanal 14D dient zur Analyse der mit der am Teleskopmast angeordneten Probenentnahmeeinrichtung 20 entnommenen Wasserprobe.

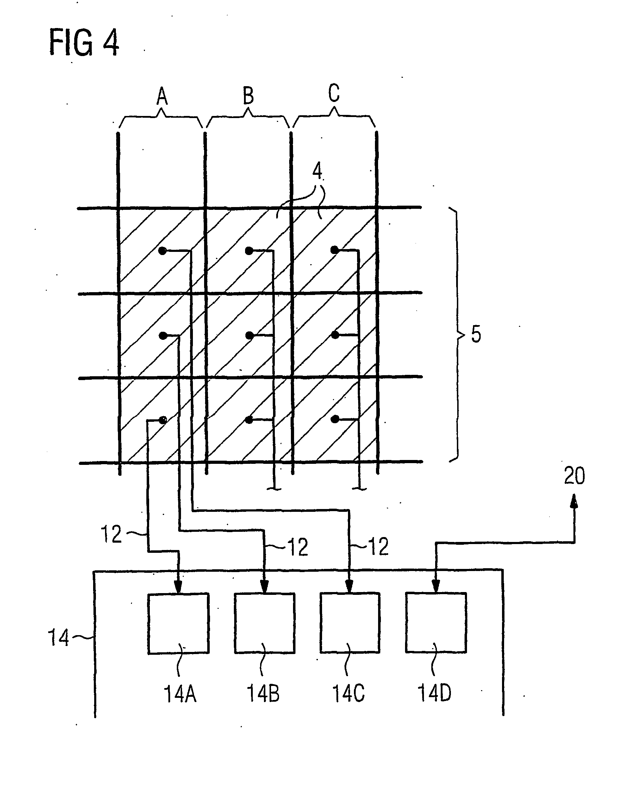

Im Falle eines positiven Befundes in einem der Messkanäle 14A-14C, beispielsweise im Messkanal 14A, werden, wie dies in Fig. 4 dargestellt ist, die aus den Zellen 4 der Gruppe A mit Hilfe der Ansaugleitungen 12 entnommenen Wasserproben getrennt voneinander den Messkanälen 14A-14C zugeführt, um auf diese Weise die ein defektes Brennelement enthaltenden Zellen 4 der Gruppe A zu identifizieren.

Nach vollständiger Analyse der Abteilung 5 wird die Haube auf eine andere Abteilung 5 umgesetzt. Die Brennelemente 40 der vorher als defekt identifizierten (positiv befundeten) Zellen 4 werden nach dem Umsetzen der Haube (siehe Fig. 1) einzeln, beispielsweise mit einem besonders zeitsparenden Mastsipping-Verfahren untersucht, während gleichzeitig die Analyse der anderen Abteilung 5 erfolgt.

## Patentansprüche

1. Verfahren zum Prüfen von Brennelementen (40) eines Siedewasserkernreaktors auf Dichtheit ihrer Brennstäbe, wobei jeweils eine Mehrzahl von Brennelementen (40) zueinander benachbart in einer Zelle (4) des oberen Kerngitters (10) des Siedewasserreaktors angeordnet sind, umfassend folgende Verfahrensschritte:
a) Über die Brennelemente (40) einer eine Abteilung (5) bildenden Mehrzahl von Zellen (4) wird zum gleichzeitigen Aufheizen der Brennelemente (40) dieser Abteilung (5) eine Haube (6) gesetzt
b) aus jeder Zelle (4) dieser Abteilung (5) wird zumindest eine Wasserprobe entnommen,
c) die Wasserproben einer Mehrzahl von eine Gruppe (A,B,C) bildenden Zellen (4) werden zusammengeführt und auf das Vorhandensein von in der Wasserprobe enthaltenen radioaktiven Spaltprodukten untersucht,
d) eine Mehrzahl von Gruppen (A,B,C) werden in einer dieser Mehrzahl der Gruppen (A,B,C) entsprechenden Anzahl von Messkanälen (14A,B,C) einer Analyseeinrichtung (14) gleichzeitig und unabhängig voneinander analysiert,
e) im Falle eines positiven Befundes in einer Gruppe (A) werden die Wasserproben aus den in dieser Gruppe (A) befindlichen Zellen (4) getrennt voneinander der Analyseeinrichtung (14) zugeführt und in einer entsprechenden Anzahl von Messkanälen (14A,B,C) getrennt voneinander analysiert, und **dadurch gekennzeichnet, dass**
f) die Brennelemente (40) einer positiv analysierten Zelle (4) jeweils für sich genommen außerhalb der Haube (6) geprüft werden.

2. Verfahren nach Anspruch 1, bei dem die unterhalb der Haube (6) befindlichen Zellen (4) im Bereich der Haube (6) fluidtechnisch voneinander und von den außerhalb der Haube (6) befindlichen Zellen (4) getrennt sind.

3. Verfahren nach Anspruch 1 oder 2, bei dem die Haube (6) nach erfolgter Analyse einer Abteilung (5) auf eine andere Abteilung (5) umgesetzt wird und die im Falle einer positiv befurideten Zelle (4) stattfindende Prüfung der einzelnen Brennelemente (40) dieser Zelle (4) simultan mit der Prüfung der anderen Abteilung (5) durchgeführt wird.

4. Verfahren nach einem der vorhergehenden Ansprüche, bei dem die Probenentnahme aus einer Zelle (4) mit einer der Anzahl der in dieser Zelle (4) befindlichen Brennelemente (40) entsprechenden Anzahl von Ansaugleitungen (122) erfolgt, deren Entnahmestellen (120) jeweils einem Brennelement (40) zugeordnet sind.

5. Verfahren nach einem der vorhergehenden Ansprüche, bei dem die Brennelemente (40) einer positiv analysierten Zelle (4) nacheinander mit einem Teleskopmast (16) einer Brennelement-Lademaschine (18) aus dem Kern (2) angehoben und in dieser angehobenen Position Wasserproben entnommen und analysiert werden.

## Claims

1. Method for testing whether the fuel rods of fuel assemblies (40) of a boiling water reactor leak, wherein a plurality of fuel assemblies (40) are each arranged adjacent to one another in a cell (4) of the upper core grid (10) of the boiling water reactor, comprising the following method steps:
a) a hood (6) is placed above the fuel assemblies (40) of a plurality of cells (4) forming a division (5) for simultaneously heating the fuel assemblies (40) of this division (5),
b) at least one water sample is taken from each cell (4) of this division (5),
c) the water samples from a plurality of cells (4) forming a group (A,B,C) are combined and tested for the presence of radioactive fission products contained in the water sample,
d) a plurality of groups (A,B,C) are analyzed simultaneously and independently of one another in a number (which corresponds to said plurality of groups (A,B,C)) of measurement channels (14A,B,C) of an analysis device (14),
e) if a result in a group (A) is positive, the water samples from the cells (4) which are located in this group (A) are fed separately to the analysis device (14) and are analyzed separately in a corresponding number of measurement channels (14A,B,C), and
**characterized in that**
f) the fuel assemblies (40) of a cell (4) analyzed as positive are tested individually outside the hood (6).

2. Method according to Claim 1, in which the cells (4) located under the hood (6) are separated hydraulically from one another in the region of the hood (6) and from the cells (4) located outside the hood (6).

3. Method according to Claim 1 or 2, in which, once one division (5) has been analyzed, the hood (6) is relocated onto another division (5) and the test of the individual fuel assemblies (40) of a cell (4) in the event of a cell (4) being found positive is carried out at the same time as the test of the other division (5).

4. Method according to one of the preceding claims, in which the samples from a cell (4) are taken using a number of intake lines (122), which number corresponds to the number of the fuel assemblies (40) located in said cell (4), with each of the removal locations (120) thereof being assigned to one fuel assembly (40).

5. Method according to one of the preceding claims, in which the fuel assemblies (40) of a cell (4) analyzed as positive are lifted up successively from the core (2) using a telescope mast (16) of a fuel assembly handling machine (18) and water samples are taken in this lifted-up position and analyzed.

## Revendications

1. Procédé pour contrôler l'étanchéité de crayons combustibles d'éléments combustibles (40) d'un réacteur à eau bouillante, respectivement une pluralité d'éléments combustibles (40) étant disposés proches les uns des autres dans une cellule (4) de la grille supérieure (10) du réacteur à eau bouillante, comprenant les étapes de procédé suivantes:
a) une cloche (6) est placée au-dessus des éléments combustibles (40) d'une pluralité de cellules (4), formant un compartiment (5) pour le chauffage simultané des éléments combustibles (4) de ce compartiment (5),
b) au moins un échantillon d'eau est prélevé de chaque cellule (4) de ce compartiment (5),
c) les échantillons d'eau d'une pluralité de cellules (4) formant un groupe (A, B, C) sont rassemblés et la présence de produits de fission radioactifs dans l'échantillon d'eau est contrôlée,
d) une pluralité de groupes (A, B, C) sont analysés simultanément et indépendamment les uns des autres dans un nombre, correspondant à cette pluralité de groupes (A, B, C), de canaux jaugeurs (14A, B, C) d'un dispositif d'analyse (14),
e) dans le cas d'un résultat positif dans un groupe (A), les échantillons d'eau sont amenés, depuis des cellules (4) se trouvant dans ce groupe (A), séparément les uns des autres au dispositif d'analyse (14) et sont analysés séparément les uns des autres dans un nombre correspondant de canaux jaugeurs (14A, B, C) et **caractérisé en ce que**
f) les éléments combustibles (40) d'une cellule analysée positivement (4) sont contrôlés en tant que tel à l'extérieur de la hotte (6)

2. Procédé selon la revendication 1, où les cellules (4) se trouvant en dessous de la cloche (6) et sont séparées hydrauliquement les unes des autres dans la zone de la cloche (6) et des cellules (4) se trouvant à l'extérieur de la cloche (6)

3. Procédé selon la revendication 1 ou 2, où la cloche (6) est transférée une fois que l'analyse d'un compartiment (5) est terminée à un autre compartiment (5) et le contrôle de chacun des éléments combustibles (40) de cette cellule (4), dans le cas d'une vérification positive dans cette cellule (4), est effectué simultanément avec le contrôle de l'autre compartiment (5).

4. Procédé selon l'une des revendications précédentes où le prélèvement d'échantillons d'une cellule (4) s'effectue avec un nombre de conduites d'aspiration (122), correspondant au nombre d'éléments combustibles (40) se trouvant dans cette cellule (4), conduites dont les points de prélèvement (120) sont associés respectivement à un élément combustible (40).

5. Procédé selon l'une des revendications précédentes où les éléments combustibles (40) d'une cellule analysée positivement (4) sont soulevés les uns après les autres par un mât télescopique (16) d'une machine de chargement d'éléments combustibles (18) et sont sortis hors du coeur (2) et dans cette position soulevée, des échantillons d'eau sont prélevés et sont analysés.
